# FASCICULE DE BREVET EUROPEEN

(11) **EP 1 115 794 B1**
(45) Date de publication et mention de la délivrance du brevet: **14.04.2004**
(21) Numéro de dépôt: 99943015.0
(22) Date de dépôt: 21.09.1999
(51) Int. Cl.: C08L 101/00, C08L 23/04, H01B 1/12

(54) **MATERIAU A RESISTANCE AU VIEILLISSEMENT THERMIQUE AMELIOREE ET SON PROCEDE DE FABRICATION**
MATERIAL MIT VERBESSERTER THERMISCHER ALTERUNGSBESTÄNDIGKEIT UND VERFAHREN ZU DESSEN HERSTELLUNG
MATERIAL WITH IMPROVED RESISTANCE TO THERMAL AGEING AND METHOD FOR MAKING SAME

(30) Priorité: 22.09.1998 FR 9811786
(43) Date de publication de la demande: 18.07.2001
(73) Titulaire: COMMISSARIAT A L'ENERGIE ATOMIQUE, 75752 Paris Cédex 15 (FR)
(72) Inventeur: HOURQUEBIE, Patrick, F-37320 Esvres sur Indre (FR); MARSACQ, Didier, F-37510 Savonnières (FR); MAZABRAUD, Philippe, F-45000 Orlèans (FR)
(74) Mandataire: Brykman, Georges
(86) Numéro de dépôt international: PCT/FR1999/002238
(87) Numéro de publication internationale: WO 2000/017274

(56) Documents cités:
- WO-A-95/28716
- WO-A-96/21694
- US-A- 5 254 633

## Description

### Domaine technique de l'invention

La présente invention se rapporte à un matériau à résistance au vieillissement thermique améliorée, à un procédé de fabrication de ce matériau, et à l'utilisation de ce matériau dans la fabrication de câbles haute et très haute tension.

Le matériau selon l'invention est un matériau isolant qui présente des caractéristiques de résistance au vieillissement thermique, en particulier de résistance au vieillissement thermique par oxydation, améliorées.

Ce matériau aux caractéristiques de vieillissement thermique améliorées peut être utilisé dans tout dispositif nécessitant une isolation électrique et notamment pour les câbles très haute tension, même à des températures élevées.

### Art antérieur

Les matériaux utilisés pour fabriquer des câbles ou des dispositifs d'isolation électrique sont souvent à base de polymères organiques isolants, tels que des polyoléfines.

La fabrication de matériaux à résistance au vieillissement thermique, en particulier à résistance au vieillissement thermique par oxydation, améliorée implique l'addition d'antioxydants.

Généralement, les antioxydants utilisés pour stabiliser les polyoléfines sont des molécules de masse moléculaire assez faible, qui ont tendance à migrer vers l'extérieur du polymère.

Les matériaux ainsi fabriqués ne résistent pas bien au vieillissement, en particulier au vieillissement thermique par oxydation.

### Exposé de l'invention

La présente invention a précisément pour but de fournir un matériau ayant une très grande stabilité thermique dans le temps, notamment à l'oxydation.

Le matériau de l'invention est un matériau à résistance au vieillissement thermique améliorée, comprenant un polymère conducteur, de préférence de 10 à 5000 ppm de polymère conducteur, dispersé dans un polymère isolant et présentant des hétérogénéités de taille inférieure ou égale à 0,1 µm, observée en microscopie électronique.

Le document US-A-5 254 633 décrit un procédé de fabrication de films ou revêtements de polyaniline conducteurs ou non conducteurs sur un substrat et des articles formés à partir dudit procédé. Il décrit que la taille des particules n'est pas critique et peut varier largement par exemple de 10⁻⁹ à 10⁻³ cm³.

Les matériaux de l'invention contiennent des taux très faibles de polymère conducteur, appelé aussi ci-après polymère conjugué, typiquement de 10 à 5000 ppm, dans l'état dopé ou dédopé.

De façon avantageuse, le polymère isolant peut être choisi parmi les résines thermoplastiques telles que les résines acryliques, styréniques, vinyliques ou cellulosiques ou parmi les polyoléfines, les polymères fluorés, les polyéthers, les polyimides, les polycarbonates, les polyuréthanes, les silicones, leurs copolymères ou des mélanges entre homopolymères et copolymères.

Par exemple, le polymère isolant peut être choisi parmi le polyéthylène, le polyéthylène basse densité, le polyéthylène haute densité, le polyéthylène basse densité linéaire, le polypropylène, l'éthylène-propylène-diène monomère, le polyvinylidène fluoré, l'éthylène butacrylate ou les copolymères d'éthylène et d'acétate de vinyle, pris seuls ou en mélange.

Le polymère isolant peut être également un polymère thermodurcissable choisi alors parmi les polyesters, les résines époxydes ou les résines phénoliques.

De façon avantageuse, le polymère conducteur présente un point de fusion ou de ramollissement compatible avec sa mise en oeuvre avec le polymère isolant retenu. En outre, la pureté de ce polymère conducteur devra être maximale car sinon les impuretés peuvent avoir une influence sur les caractéristiques de tenue en tension obtenue avec les matériaux de l'invention. Il devra être soluble dans les solvants organiques dans son état dopé (oxydé) ou préférentiellement dans son état dédopé (réduit).

Selon l'invention, le polymère conducteur peut être une charge de type organique possédant un système d'électrons n, délocalisé sur au moins 7 atomes, sur la chaîne principale du polymère ou les ramifications de celle-ci. Ce polymère conducteur peut être soit un polymère conducteur simple, soit un polymère conducteur greffé sur un polymère isolant, soit un copolymère contenant un ou des systèmes conjugués, ou toute molécule organique suffisamment délocalisée ou présentant une conductivité suffisante d'au moins environ 10⁻⁹S.cm⁻¹.

De telles molécules peuvent être par exemple des polypeptides ou la vitamine A. Lorsqu'il s'agit de polymères, celui-ci est choisi de façon avantageuse dans le groupe comprenant le polythiophène, les polyalkylthiophènes, la polyaniline, le polypyrrole, le polyacétylène, le polyparaphénylène, leurs dérivés ou leurs mélanges.

Les matériaux de l'invention sont obtenus par un mélange homogène d'un polymère conjugué et d'un polyoléfine conduisant à une homogénéité à une échelle inférieure à 0,1 µm. En effet, la réalisation de tels matériaux par mélange direct des poudres ou granulés ne permet pas d'obtenir l'amélioration des propriétés de vieillissement pour des taux de polymère conjugué de l'ordre de quelques 1000 ppm.

Aussi, l'invention fournit également un procédé de fabrication de matériaux à résistance au vieillissement, en particulier au vieillissement thermique par oxydation, améliorée, caractérisé en ce qu'il comprend les étapes consistant à :
- dissoudre au moins un polymère conducteur dans un solvant organique, de façon à former une solution d'imprégnation,
- imprégner des granulés constitués d'un polymère isolant ou d'un mélange de polymères isolants avec ladite solution d'imprégnation,
- évaporer le solvant de façon à obtenir des granulés de polymère isolant recouverts d'un polymère conducteur,
- sécher lesdits granulés,
- extruder ou mélanger à chaud lesdits granulés pour former un mélange homogène.

Le procédé de l'invention permet de disperser le polymère conjugué dans le polymère isolant à une échelle quasi-moléculaire.

La réalisation des mélanges passe par une première phase d'imprégnation des granulés de polymère isolant par une solution contenant le polymère conjugué. L'utilisation de ce procédé permet d'obtenir un très bon mélange présentant l'homogénéité requise.

Après évaporation du solvant, les granulés de polymère isolant sont recouverts par la charge organique. Les granulés sont ensuite séchés en étuve et mis en oeuvre par extrusion. Le jonc obtenu est granulé. Les granulés obtenus peuvent alors se mettre en oeuvre par toutes les techniques de mise en forme classiques utilisables pour le polymère isolant tel qu'un moulage, un calandrage, une injection, une extrusion.

Les caractéristiques structurales du polymère conjugué tels que sa longueur de conjugaison, sa masse molaire moyenne, son taux de défaut dans la chaîne ont, même à des taux très faibles, une influence sur les stabilisations thermiques obtenues avec des matériaux de l'invention. Ces caractéristiques pourront être contrôlées par les conditions de synthèse du polymère conjugué.

Selon le procédé de l'invention, le polymère conducteur peut représenter de 10 à 5000 ppm du polymère isolant.

Selon l'invention, le polymère isolant et/ou le polymère conducteur peut, peuvent, être celui, ceux, cité(s) précédemment.

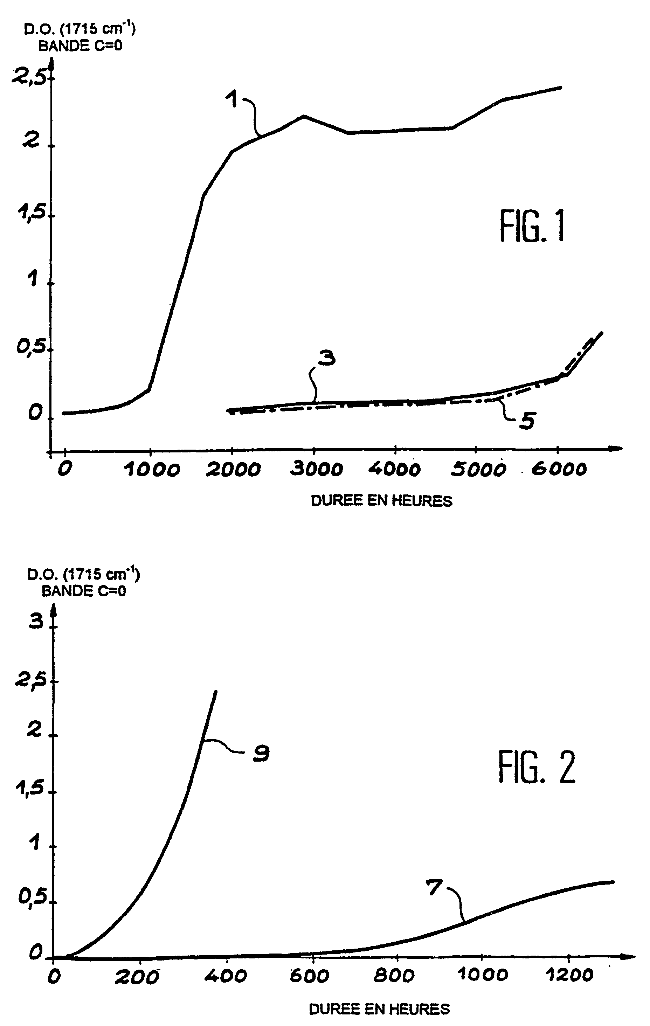

Le matériau de l'invention montre une très bonne résistance au vieillissement thermique, notamment à l'oxydation, comme le montrent les exemples illustratifs et non limitatifs ci-dessous, et les courbes des figures 1 et 2 en annexe.

Ce matériau, obtenu par exemple par le procédé précité, peut être utilisé dans la fabrication de câbles haute et/ou très haute tension.

Plus précisément, il est possible de remplacer le polyéthylène réticulable chimiquement (PRC) actuellement utilisé dans les câbles très haute tension par le matériau obtenu par le procédé selon l'invention.

### Description des figures

La figure 1 est un graphique montrant l'évolution de l'absorbance à 1715 cm⁻¹ (acides et cétones) en fonction de la durée de thermo-oxydation pour un polyéthylène vierge et pour le même polyéthylène stabilisé comme décrit dans l'exemple 1 (PBT FeCl₃) et dans l'exemple 2 (PBT Magnésium) suivants.

La figure 2 est un graphique montrant l'évolution de l'absorbance à 1715 cm⁻¹ (acides et cétones) en fonction de la durée de thermo-oxydation pour un polyéthylène vierge et pour un polyéthylène stabilisé comme décrit dans l'exemple 3 suivant.

### Exemple 1

Du poly(octyl-3 thiophène) (POT) a été synthétisé par oxydation au chlorure ferrique dans le chloroforme suivant une méthode décrite dans R. SUGIMOTO, S. TAKEDA, H.B. GU, K. YOSHINO, Chemistry Express, vol. 1, n°11, pp. 635-638 (1986). L'équation (I) chimique suivante résume cette synthèse :

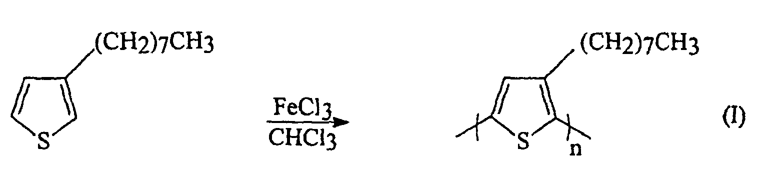

Les paramètres affectant les propriétés de stabilisation thermique sont ici le rapport oxydant sur monomère, le solvant et la température de polymérisation.

400 mg du polymère précité sont dissous dans 200 ml de tétrahydrofurane (THF) de manière à obtenir la solution d'imprégnation. On rajoute alors 200 g de granulés de polyéthylène basse densité. Le solvant est évaporé à 50°C à l'aide d'un évaporateur rotatif. Un film de polymère conjugué est alors déposé sur les granulés. Ces granulés sont séchés sous vide, à température ambiante pendant 24 h. Les granulés sont ensuite extrudés. Une bande de mélange est obtenue par une filière plate de largeur 50 mm.

Le matériau se présente alors sous la forme d'une bande translucide de couleur rouge brique contenant 2000 ppm de POT.

Une analyse en microscopie électronique à balayage ne permet pas de déceler d'hétérogénéités à l'échelle de 0,1 µm dans le matériau fabriqué dans cet exemple.

A titre de comparaison, le même matériau réalisé en mélangeant directement la poudre de polymère conducteur et la poudre de polymère isolant avant l'extrusion conduit à un matériau présentant des hétérogénéités de taille de l'ordre de 0,2 micron.

Des mesures de la vitesse d'oxydation lors d'un vieillissement à 80°C du matériau fabriqué dans cet exemple ont été réalisées en même temps que des mesures de la vitesse d'oxydation lors d'un vieillissement à 80°C d'un polyéthylène vierge. Le vieillissement a été réalisé dans une étuve.

La figure 1 est un graphique réalisé à partir de ces mesures montrant l'évolution de l'absorbance à 1715 cm⁻¹ (acides et cétones) en fonction de la durée en heures de thermo-oxydation pour un polyéthylène vierge (courbe référencée 1) et le même polyéthylène stabilisé comme décrit dans cet exemple 1 (courbe référencée 3).

On note d'après ces résultats, par rapport au polyéthylène vierge, une diminution de la vitesse d'oxydation lors d'un vieillissement à 80°C pour le matériau selon l'invention. On montre ainsi que la présence du polymère conjugué permet de stabiliser le matériau.

### Exemple 2

Du poly(butyl-3 thiophène) (PBT) a été synthétisé suivant une méthode générale décrite dans O. INGANÄS, W.R. SALANECK, J.E. ÖSTERHOLM, J. LAAKSO, Synthetic Metals, 22, pp. 395-406 (1988) en remplaçant l'iode par du brome. L'équation (II) chimique suivante résume cette synthèse :

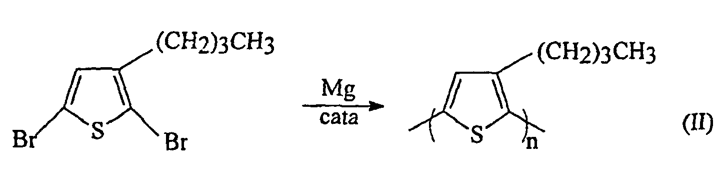

Le contrôle des conditions de synthèse permet de faire varier les caractéristiques du matériau et les propriétés finales du mélange. Par exemple la masse moléculaire va dépendre des conditions de synthèse et modifier les propriétés de solubilité du polymère conjugué dans la matrice dans laquelle il est introduit.

Le polymère obtenu est mis en oeuvre comme dans l'exemple 1. Une bande translucide de couleur orangée, contenant 2000 ppm de PBT est obtenue.

Une analyse en microscopie électronique à balayage ne permet pas de déceler d'hétérogénéités à l'échelle de 0,1 µm dans le matériau fabriqué dans cet exemple.

Des mesures de la vitesse d'oxydation lors d'un vieillissement à 80°C du matériau fabriqué dans cet exemple ont été réalisées. Les résultats de ces mesures ont permis de construire la courbe 5 sur la figure 1 précédemment citée.

On note d'après ces résultats, par rapport au polyéthylène vierge, une diminution du taux d'oxydation en fonction du temps lors d'un vieillissement à 80°C pour le matériau selon l'invention. On montre ainsi que la présence du polymère conjugué permet de stabiliser le matériau. Cette stabilisation est du même ordre que celle obtenue avec le polymère du premier exemple (courbe référencée 3 sur la figure 1).

Les exemples 1 et 2 montrent donc que les polymères conjugués dérivés du thiophène selon la présente invention permettent de retarder fortement l'oxydation du polyéthylène. En effet, le matériau non stabilisé commence à se dégrader après 1000 heures d'étuvage à 80°C, alors qu'après 6000 heures les matériaux de l'invention ne sont toujours pas dégradés à cette même température.

### Exemple 3

Un mélange à base de polyaniline (Pani) et de polyéthylène basse densité est réalisé. Une poudre de polyaniline dopée par l'acide dodécylbenzènesulfonique dont la réalisation est par exemple décrite dans Y. CAO, P. SMITH, A.J. HEEGER, Synthetic Metals, 48, pp. 91-97 (1992) est utilisée. Cette poudre est mise en solution dans le xylène. Cette solution est utilisée pour imprégner les granulés suivant le procédé de l'invention, comme dans l'exemple 1.

Les granulés obtenus sont extrudés comme dans l'exemple 1. Une bande translucide verte contenant 500 ppm de Pani est alors obtenue.

Une analyse en microscopie électronique à balayage ne permet pas de déceler d'hétérogénéités à l'échelle de 0,1 µm dans le matériau fabriqué dans cet exemple.

Des mesures de l'évolution de l'absorbance à 1715 cm⁻¹ (acides et cétones) en fonction de la durée en heure de thermo-oxydation (T=90°C, épaisseur 500 µm) pour un polyéthylène vierge et un polyéthylène stabilisé comme dans cet exemple 3 ont été réalisées. La figure 2 en annexe est un graphique réalisé à partir de ces mesures.

La stabilisation des propriétés obtenue est là aussi très importante, pour un vieillissement plus sévère, puisque l'oxydation du matériau de la présente invention (courbe référencée 7) ne se produit qu'à partir de 600 heures de vieillissement à 90°C alors que l'oxydation du polyéthylène vierge débute à partir de 50 heures (courbe référencée 9).

### Exemple 4 : Fabrication d'un câble haute tension

Le câble fabriqué comprend une âme conductrice (noyau), recouverte successivement d'un écran semi-conducteur interne, d'un matériau de l'invention tel que ceux des exemples 1 à 3, d'un écran semi-conducteur externe et d'une gaine de protection. Ce câble présente une meilleure résistance au vieillissement à l'oxydation thermique, même à des températures de 90°C.

L'utilisation d'un polymère conjugué dans des mélanges homogènes à une échelle inférieure ou égale à 0,1 µm, qui fait l'objet de la présente invention, est une solution qui permet d'augmenter de manière surprenante les performances au niveau de la durée de vie du matériau soumis à une contrainte thermique.

## Revendications

1. Procédé de fabrication de matériaux isolant à résistance au vieillissement thermique améliorée, **caractérisé en ce qu'**il comprend les étapes consistant à :
- dissoudre au moins un polymère conducteur de pureté maximale dans un solvant organique, de façon à former une solution d'imprégnation,
- imprégner des granulés constitués d'un polymère isolant ou d'un mélange de polymères isolants avec ladite solution d'imprégnation,
- évaporer le solvant de façon à obtenir des granulés de polymère isolant recouverts d'un polymère conducteur,
- sécher lesdits granulés,
- extruder ou mélanger à chaud lesdits granulés pour former un mélange homogène,
dans lequel le polymère conducteur représente de 10 à 5 000 ppm du polymère isolant.

2. Procédé de fabrication selon la revendication 1, **caractérisé en ce que** l'imprégnation des granulés s'effectue par trempage de ceux-ci dans la solution d'imprégnation.

3. Procédé de fabrication selon la revendication 1, **caractérisé en ce que** le polymère isolant est choisi parmi les résines thermoplastiques telles que les résines acryliques, styréniques, vinyliques ou cellulosiques ou parmi les polyoléfines, les polymères fluorés, les polyéthers, les polyimides, les polycarbonates, les polyuréthanes, les silicones, leurs copolymères ou des mélanges entre homopolymères et copolymères.

4. Procédé de fabrication selon la revendication 1, **caractérisé en ce que** le polymère isolant est choisi parmi le polyéthylène, le polyéthylène basse densité, le polyéchylène haute densité, le polyéthylène basse densité linéaire, le polypropylène, l'éthylène-propylènediène monomère, le polyvinylidène fluoré, l'éthylène butacrylate ou les copolymères d'éthylène et d'acétate de vinyle, pris seuls ou en mélange.

5. Procédé de fabrication selon la revendication 1, **caractérisé en ce que** le polymère isolant est choisi parmi les résines thermodurcissables telles que les polyesters, les résines époxydes ou les résines phénoliques.

6. Procédé de fabrication selon la revendication 1, **caractérisé en ce que** le polymère conducteur présente une conductivité d'au moins environ 10⁻⁹S.cm⁻¹.

7. Procédé de fabrication selon la revendication 6, **caractérisé en ce que** le polymère conducteur est un polymère conducteur simple, un polymère conducteur greffé sur un polymère isolant ou un copolymère contenant au moins un système conjugué.

8. Procédé de fabrication selon la revendication 6, **caractérisé en ce que** le polymère conducteur est choisi parmi le polythiophène, les polyalkylthiophènes, la polyaniline, le polypyrrole, le polyacétylène, le polyparaphénylène, leurs dérivés ou leurs mélanges.

9. Matériau obtenu par le procédé selon l'une quelconque des revendications 1 à 8.

10. Utilisation du matériau isolant à résistance thermique améliorée obtenu par le procédé selon l'une quelconque des revendications 1 à 8 dans la fabrication de câbles à haute et/ou à très haute tension.

## Claims

1. Process for the production of insulating materials with an improved resistance to thermal ageing, **characterized in that** it comprises the stages consisting of:
- dissolving at least one maximum purity, conductive polymer in an organic solvent, so as to form an impregnation solution,
- impregnating granules constituted by an insulating polymer or a mixture of insulating polymers with said impregnation solution,
- evaporating the solvent so as to obtain insulating polymer granules covered with a conductive polymer,
- drying said granules,
- extruding or mixing in the hot state said granules in order to form a homogeneous mixture,
wherein the conductive polymer represents 10 to 5000 ppm of the insulating polymer.

2. Production process according to claim 1, **characterized in that** the impregnation of the granules takes place by immersing the same in the impregnation solution.

3. Production process according to claim 1, **characterized in that** the insulating polymer is chosen from among thermoplastic resins such as acrylic, styrene, vinyl or cellulose resins or among polyolefins, fluorine-containing polymers, polyethers, polyimides, polycarbonates, polyurethanes, silicones, their copolymers or mixtures of homopolymers and copolymers.

4. Production process according to claim 1, **characterized in that** the insulating polymer is chosen from among polyethylene, low density polyethylene, high density polyethylene, linear low density polyethylene, polypropylene, ethylene-propylene-diene monomer, fluorine-containing polyvinylidene, ethylene butacrylate or copolymers of ethylene and vinyl acetate, considered singly or in mixture.

5. Production process according to claim 1, **characterized in that** the insulating polymer is chosen from among thermosetting resins such as polyesters, epoxy resins or phenol resins.

6. Production process according to claim 1, **characterized in that** the conductive polymer has a conductivity of at least approximately 10-9 S.cm⁻¹.

7. Production process according to claim 6, **characterized in that** the conductive polymer is a simple conductive polymer, a conductive polymer grafted on an insulating polymer or a copolymer containing at least one conjugate system.

8. Production process according to claim 6, **characterized in that** the conductive polymer is chosen from among polythiophene, polyalkylthiophenes, polyaniline, polypyrrole, polyacetylene, polyparaphenylene, their derivatives or their mixtures.

9. Material obtained by the process according to any one of the claims 1 to 8.

10. Use of the improved thermal resistance insulating material obtained by the process according to any one of the claims 1 to 8 in the manufacture of high and/or very high voltage cables.

## Patentansprüche

1. Verfahren zur Herstellung von isolierenden Materialien mit verbesserter thermischer Alterungsbeständigkeit, **dadurch gekennzeichnet, dass** das Verfahren die Schritte umfasst, bestehend aus:
- Auflösen mindestens eines leitenden Polymers höchster Reinheit in einem organischen Lösungsmittel auf einer Weise, dass sich eine Imprägnierlösung bildet,
- Imprägnieren von Granulat, das aus einem isolierenden Polymer oder einem Gemisch isolierender Polymere besteht, mit dieser Imprägnierungslösung,
- Verdampfen des Lösungsmittels auf eine Weise, dass das Granulat des isolierenden Polymers, das mit einem leitenden Polymer beschichtet ist, erhalten wird,
- Trocknen dieses Granulats,
- Extrudieren oder Vermischen dieses Granulats mit Wärme zur Bildung eines homogenen Gemisches,
in dem das leitende Polymer von 10 bis 5000 ppm des isolierenden Polymers darstellt

2. Verfahren zur Herstellung gemäß Anspruch 1, **dadurch gekennzeichnet, dass** das Imprägnieren des Granulats durch Eintauchen desselben in die Imprägnierungslösung durchgeführt wird.

3. Verfahren zur Herstellung gemäß Anspruch 1, **dadurch gekennzeichnet, dass** das isolierende Polymer aus thermoplastischen Harzen, wie Acryl-, Styrol-, Vinyl- oder Cellulose-Harzen oder aus Polyolefinen, fluorierten Polymeren, Polyethern, Polyimiden, Polycarbonaten, Polyurethanen, Silikonen, ihren Copolymeren oder den Gemischen der Homopolymeren und Copolymeren ausgewählt ist

4. Verfahren zur Herstellung gemäß Anspruch 1, **dadurch gekennzeichnet, dass** das isolierende Polymer ausgewählt ist aus Polyethylen, Polyethylen niedriger Dichte, Polyethylen hoher Dichte, linearem Polyethylen niedriger Dichte, Polypropylen, Ethylenpropylendienmonomer, fluoriertem Polyvinyliden, Ethylenbutacrylat oder Ethylen- und Vinylacetat-Copolymeren, allein oder im Gemisch.

5. Verfahren zur Herstellung gemäß Anspruch 1, **dadurch gekennzeichnet, dass** das isolierende Polymer ausgewählt ist aus thermisch härtbaren Harzen, wie Polyestern, EpoxidHarzen oder Phenol-Harzen.

6. Verfahren zur Herstellung gemäß Anspruch 1, **dadurch gekennzeichnet, dass** das leitende Polymer eine Leitfähigkeit von mindestens ungefähr 10⁻⁹S.cm⁻¹ aufweist.

7. Verfahren zur Herstellung gemäß Anspruch 6, **dadurch gekennzeichnet, dass** das leitende Polymer ein einfaches leitendes Polymer, ein leitendes Polymer aufgetragen auf einem isolierenden Polymer oder ein Copolymer, enthaltend mindestens ein konjugiertes System, ist.

8. Verfahren zur Herstellung gemäß Anspruch 6, **dadurch gekennzeichnet, dass** das leitende Polymer ausgewählt ist aus Polythiophen, Polyalkylthiophenen, Polyanilin, Polypyrrol, Polyacetylen, Polyparaphenylen, Derivaten davon oder Gemischen davon.

9. Material erhalten durch das Verfahren gemäß einem der Ansprüche 1 bis 8.

10. Verwendung von isolierendem Material mit verbesserter thermischer Beständigkeit erhalten durch das Verfahren gemäß einem der Ansprüche 1 bis 8, für die Herstellung von Kabeln für hohe und/oder sehr hohe Spannung.
